# EUROPEAN PATENT APPLICATION

(11) **EP 4 542 290 A2**
(43) Date of publication of application: **23.04.2025**
(21) Application number: 24201114.6
(22) Date of filing: 18.09.2024
(51) Int. Cl.: G02F 1/025, G02F 1/313, G02F 1/225

(54) **PHOTONIC SWITCH WITH MULTI-WAVELENGTH ROUTING CAPABILITIES**

(30) Priority: 28.09.2023 US 202363540991 P; 28.08.2024 US 202418818365
(71) Applicant: Apple Inc., Cupertino, CA 95014 (US)
(72) Inventor: ARBORE, Mark Alan, Cupertino, 95014 (US); LIU, Wei, Cupertino, 95014 (US); TERREL, Matthew A., Cupertino, 95014 (US); PELC, Jason S., Cupertino, 95014 (US)
(74) Representative: Zacco Denmark A/S

(57) **Abstract**

Disclosed herein are photonic switches. The controllable photonic switch may be configured with an asymmetry and different doping level that concurrently route two different wavelengths of light by wavelength-dependent phase shifters. In some instances, the controllable photonic switch includes a waveguide having an asymmetric cross-sectional shape. In other instances, the controllable photonic switch comprises first and second couplers (206, 212) and first and second phase shifters (208, 210) having different wavelength dependencies and is configured to selectively route different wavelengths of light to different outputs (214, 216) of the controllable photonic switch.

## Description

### FIELD

This disclosure relates generally to photonic switches, as well as phase shifters for use in these photonic switches, that simultaneously and independently route different wavelengths of light. More particularly, the photonic switches may independently route multiple wavelengths of light via phase shifters having different wavelength dependencies.

### BACKGROUND

Controllable photonic switches are often used in photonic integrated circuits to selectively route light to different optical pathways within a photonic integrated circuit. In some instances, a photonic switch may incorporate a phase shifter that selectively modulates the phase of light carried by a waveguide of the photonic switch, and thereby adjusts how much light each output of the photonic switch receives. This phase shift may be further adjusted to account for the wavelength of light received by the photonic switch, but existing photonic switches are only able to tune for a single wavelength at a time. Accordingly, it may be desirable to provide a controllable photonic switch that is capable of adjusting the routing of multiple wavelengths of light received by the controllable photonic switch.

### SUMMARY

Described herein are photonic integrated circuits, as well as optical devices such as controllable photonic switches that may be incorporated as part of photonic integrated circuits, that include one or more phase shifters.

Some embodiments are directed to a photonic integrated circuit that includes a substrate having a top surface, a waveguide supported on the top surface of the substrate, wherein a length of the waveguide has a cross-sectional shape that is asymmetric in a direction parallel to the top surface and comprises a first doping region and a second doping region that form a diode. A phase shifter includes the diode, a first conductive trace electrically connected to the first doping region, a second conductive trace electrically connected to the second doping region; and a control circuit configured to drive current through the diode via the first conductive trace and the second conductive trace to introduce a wavelength-dependent phase shift to light traveling through the length of the waveguide. In some variations, the diode is a PN diode. In some variations, the waveguide is a rib waveguide.

In some variations, the cross-sectional shape of the length of the waveguide has a first section having a first height, a second section having a second height, and a third section having a third height. Additionally or alternatively, the second section is positioned between the first section and the third section, and the third height is larger than the first height and is smaller than the second height.

In some variations, an interface between the first doping region and the second doping region is positioned in the first section. In some of these variations, a cross-sectional area of the second doping region is larger than a cross-sectional area of the first doping region. Additionally or alternatively, an interface between the first doping region and the second doping region is positioned in the second section. In some variations, a cross-sectional area of the second doping region is equal to a cross-sectional area of the first doping region. In some of these variations, an interface between the first doping region and the second doping region is positioned in the third section. Additionally or alternatively, a cross-sectional area of the first doping region is larger than a cross-sectional area of the second doping region. In some variations, a first conductive trace electrically connected to the first section. Additionally or alternatively, a second conductive trace electrically connected to the third section.

Other embodiments are directed to a photonic integrated circuit that a controllable switch includes a first coupler having a first input, a second input, a first output, and a second output. A second coupler includes a third input, a fourth input, a third output, and a fourth output. A first leg connects the first output of the first coupler to the third input of the second coupler. A second leg connects the second output of the first coupler to the fourth input of the second coupler. The controllable switch includes a first phase shifter with a first wavelength dependency and a second phase shifter with a second wavelength dependency that is different than the first wavelength dependency. The first phase shifter and the second phase shifter are each positioned between the first coupler and the second coupler, and the controllable switch is configured to concurrently receive a first wavelength of light and a second wavelength of light via the first coupler. The first phase shifter and the second phase shifter are controllable to independently route the first wavelength of light to a first selection of the third and fourth outputs and the second wavelength of light to a second selection of the third and the fourth outputs.

In some variations, the photonic integrated circuit includes a light source unit that includes one or more light sources configured to generate the first wavelength of light and the second wavelength of light. In some of these variations, a controller is configured to control the first phase shifter to apply a first phase shift to the first wavelength of light and a second phase shift to the second wavelength of light according to the first wavelength dependency. The controller may concurrently control the second phase shifter to apply a third phase shift to the first wavelength of light and a fourth phase shift to the second wavelength of light according to the second wavelength dependency. The first phase shift and the third phase shift route the first wavelength of light from the first coupler to the first selection of the third and fourth outputs. In some variations, the second phase shift and the fourth phase shift route the second wavelength of light from the first coupler to the second selection of the third and fourth outputs.

In some variations, the first phase shifter is positioned to change the phase of light traveling through the first leg. Additionally or alternatively, the second phase shifter is positioned to change the phase of light traveling through the second leg. In some variations, the first selection of the third and fourth outputs is the third output. In some of these instances, the second selection of the third and fourth outputs is the fourth output. In other variations, the first selection of the third and fourth outputs is the third output and the fourth output. In some of these variations, the second selection of the third and fourth outputs is the third output and the fourth output.

In other embodiments, a method of operating a controllable switch having a set of inputs and a set of outputs and comprising a first coupler, a second coupler, and a plurality of phase shifters positioned between the first coupler and the second coupler. The method includes receiving a first wavelength of light at a first input of the set of inputs. The method includes concurrently receiving a second wavelength of light at a second input of the set inputs. The method includes applying a plurality of wavelength-dependent phase shifts between the first coupler and the second coupler using the plurality of phase shifters to independently route the first wavelength of light to a first target selection of the set of outputs and the second wavelength of light to a second target selection of the set of outputs. The plurality of wavelength-dependent phase shifts are selected using the first and second inputs, the first and second wavelengths, the first and second target selections.

In addition to the exemplary aspects and embodiments described above, further aspects and embodiments will become apparent by reference to the drawings and by study of the following description.

### BRIEF DESCRIPTION OF THE DRAWINGS

The disclosure will be readily understood by the following detailed description in conjunction with the accompanying drawings, wherein like reference numerals designate like structural elements, and in which:
FIG. 1 shows a schematic diagram of an optical system that includes a photonic integrated circuit.
FIGS. 2A shows a schematic view of a variation of photonic switch suitable for use with the photonic integrated circuits described herein. FIG. 2B shows a schematic view of another variation of a photonic switch suitable for use with the photonic integrated circuits described herein.
FIG. 3 shows a graphs illustrating a comparison of different phase shifts provided by phase shifters having different wavelength dependencies.
FIGS. 4A-4E show schematic views illustrating the operation of a variation of a 1x2 controllable photonic switch having a single input and two outputs.
FIGS. 5A-5E show schematic views illustrating the operation of a variation of a 2x2 controllable photonic switch having two inputs and two outputs.
FIGS. 6A and 6B show cross-sectional side views of an example of a waveguide having a symmetric cross-sectional shape.
FIG. 7A and 7B show cross-sectional side views of an example of waveguide having an asymmetric cross-sectional shape.
FIG. 8A-8D show cross-sectional side views of a variation of a carrier-based phase shifter, such as described herein, that includes a waveguide having an asymmetric cross-sectional shape.
FIG. 9A-9D show cross-sectional side views of another variation of a carrier-based phase shifter, such as described herein, that includes a waveguide having an asymmetric cross-sectional shape.
FIG. 10A-10D show cross-sectional side views of still another variation of a carrier-based phase shifter, such as described herein, that includes a waveguide having an asymmetric cross-sectional shape.
FIG. 11 depicts a method of operating a controllable switch having a set of inputs and a set of outputs and comprising a first coupler, a second coupler, and a plurality of phase shifters positioned between the first coupler and the second coupler.

It should be understood that the proportions and dimensions (either relative or absolute) of the various features and elements (and collections and subsettings thereof) and the boundaries, separations, and positional relationships presented therebetween, are provided in the accompanying figures merely to facilitate an understanding of the various embodiments described herein and, accordingly, may not necessarily be presented or illustrated to scale, and are not intended to indicate any preference or requirement for an illustrated embodiment to the exclusion of embodiments described with reference thereto.

Directional terminology, such as "top", "bottom", "upper", "lower", "front", "back", "over", "under", "above", "below", "left", "right", "vertical", "horizontal", *etc.* is is used with reference to the orientation of some of the components in some of the figures described below, and is not intended to be limiting. Because components in various embodiments can be positioned in a number of different orientations, directional terminology is used for purposes of illustration to demonstrate the relative orientation between components of the systems and devices described herein. The directional terminology is intended to be construed broadly, and therefore should not be interpreted to preclude components being oriented in different ways. Also, as used herein, the phrase "at least one of' preceding a series of items, with the term "and" or "or" to separate any of the items, modifies the list as a whole, rather than each member of the list. The phrase "at least one of" does not require selection of at least one of each item listed; rather, the phrase allows a meaning that includes at a minimum one of any of the items, and/or at a minimum one of any combination of the items, and/or at a minimum one of each of the items. By way of example, the phrases "at least one of A, B, and C" or "at least one of A, B, or C" each refer to only A, only B, or only C; any combination of A, B, and C; and/or one or more of each of A, B, and C. Similarly, it may be appreciated that an order of elements presented for a conjunctive or disjunctive list provided herein should not be construed as limiting the disclosure to only that order provided.

### DETAILED DESCRIPTION

Reference will now be made in detail to representative embodiments illustrated in the accompanying drawings. It should be understood that the following descriptions are not intended to limit the embodiments to one preferred embodiment. To the contrary, it is intended to cover alternatives, modifications, and equivalents as can be included within the spirit and scope of the described embodiments as defined by the appended claims.

The following disclosure relates photonic switches and phase shifters for use in photonic integrated circuits. In some instances, the photonic switches described herein are configured to simultaneously and independently routes two or more arbitrary wavelengths of light. Specifically, each wavelength of light may be received from one or more input waveguides of the photonic switch and may be selectively routed between different output waveguides of the photonic switch. The photonic switch described herein are configured to include phase shifters with different wavelength dependencies, where the phase shifters may collectively controlled to separately route the different wavelengths of light received by the photonic switch.

Additionally, examples of phase shifters are described herein and are configured with a diode formed in a length of a waveguide having an asymmetry cross-sectional shape. Such a phase shifter may be controlled by a control circuit to drive current through the diode to introduce a wavelength-dependent phase shift to light traveling through the length of the waveguide. The design of the diode may be selected to achieve a particular wavelength dependency, and one or more of these phases shifters designed with different wavelength dependencies may be incorporated into the photonic switches described herein.

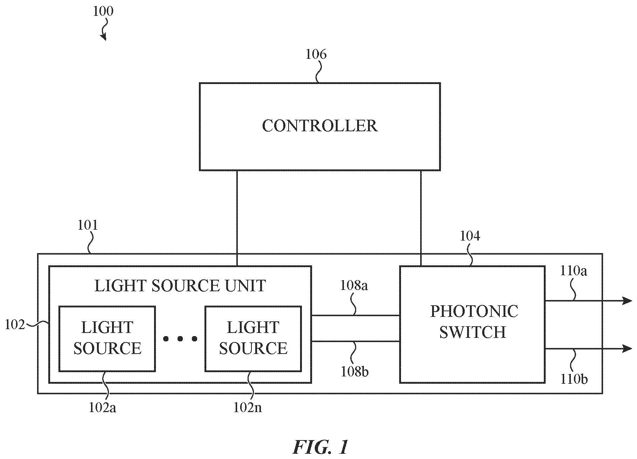

These and other embodiments are discussed with reference to FIGS. 1-11. However, those skilled in the art will readily appreciate that the detailed description given herein with respect to these figures is for explanatory purposes only and should not be construed as limiting.

FIG. 1 shows a schematic diagram of an optical system 100 including a photonic integrated circuit 101 that includes a light source unit 102 and a photonic switch 104, and a controller 106. The light source unit 102 is configured to simultaneously generate multiple wavelengths of light. The light source unit 102 may be optically coupled to the photonic switch 104 by a set of waveguides 108a-108b, and may simultaneously direct the multiple wavelengths of light to the photonic switch 104. The photonic switch 104 is configured to independently route the different simultaneously-received wavelengths between first and second outputs 110a, 110b of the photonic switch 104 as described in more detail herein. Accordingly, the different wavelengths of light may be independently routed to different portions of the photonic integrated circuit 101 as may be desired.

The light source unit 102 includes a set of light sources 102a-102n, each of which is selectively operable to emit light at a corresponding set of wavelengths. Each light source may be any component capable of generating light at one or more particular wavelengths, such as a light-emitting diode or a laser. A laser may include a semiconductor laser, such as a laser diode (e.g., a distributed Bragg reflector laser, a distributed feedback laser, an external cavity laser), a quantum cascade laser, or the like. A given light source may be single-frequency (fixed wavelength) or may be tunable to selectively generate one of multiple wavelengths (i.e., the light source may be controlled to output different wavelengths at different times). The set of light sources may include any suitable combination of light sources, and collectively may be operated to generate light at any of a plurality of different wavelengths.

The light source unit 102 is capable of generating multiple different wavelengths simultaneously (e.g., operating multiple light sources of the set of light sources 102a-102n to generate different wavelengths of light), though it should be appreciated that in other instances the light source unit 102 may be operated to generate a single wavelength of light at a time. In these instances, the photonic switch 104 may also be operated to route the single wavelength of light to a desired selection of the outputs 1 10a-1 10b. The light source unit 102 may be integrated into the photonic integrated circuit 101 that includes the photonic switch 104 or may be separate from the photonic integrated circuit 101 and couple light into the photonic integrated circuit 101. Additionally, the optical system 100 may include additional components (not shown) between the light sources of light source unit 102 and the photonic switch 104, such that the light initially generated by the light source unit 102 may be altered before it reaches the photonic switch 104.

The controller 106 may be used to control the operation of the light source unit 102 (e.g., to simultaneously generate multiple wavelengths of light) and may further control operation of the photonic switch 104. For example, the controller 106 may control multiple phase shifters (not shown) of the photonic switch 104. The controller 106 may include any combination of hardware, firmware, and/or software (e.g., one or more processors connected to corresponding drive circuitry for the light source unit 102 and each of the phase shifters of the photonic switch). The design of controllers used to control the operation of light sources and phase shifters will be readily understood by someone of ordinary skill in the art.

In generally, the photonic switch 104 includes at least two phase shifters, each of which has a different wavelength dependency. Each phase shifter may be controlled to apply a wavelength-dependent phase shift to light traveling through a waveguide of the photonic switch 104. The collective phase shifts applied to a given wavelength of light will control how that wavelength is routed between the outputs 110a, 110b of the photonic switch 104. For example when the photonic switch simultaneously receives a first and a second wavelength of light at one or more of its inputs through the waveguides 108a-108b, the controller 106 may control a first phase shifter in the photonic switch 104 to apply a first phase shift to the first wavelength of light and a second phase shift to the second wavelength of light according to the a first wavelength dependency. The controller 106 may also concurrently control a second phase shifter in the photonic switch 104 to apply a third phase shift to the first wavelength of light and a fourth phase shift to the second wavelength of light according to a different second wavelength dependency. The first and third phase shifts may control how light of the first wavelength is routed between the outputs 11 0a, 11 0b, whereas the second and fourth phase shifts may control how light of the second wavelength is routed between the outputs 1 10a, 110b. These phase shifts may be selected by the controller 106 to allow independently-controllable routing of the first and second wavelengths (e.g., changing the selection of outputs 1 10a, 110b for the first wavelength of light may not impact how the second wavelength of light is routed, and vice versa).

The photonic switches described herein include a first coupler and a second coupler that are optically connected by a pair of intermediate waveguides (also referred to herein as "legs"). The first coupler has a set of inputs that acts as the inputs of the photonic switch, whereas the second coupler has a set of outputs that acts as the outputs of the photonic switch. The first coupler has a set of outputs that is optically connected, via the pair of intermediate waveguides, to a set of inputs of the second coupler. Additionally, the photonic switch includes at least two phase shifters, each of which is configured to provide a phase shift to light in a corresponding intermediate waveguide. The phase shifters may be positioned to provide phase changes to light in the same intermediate waveguide, or may be positioned to provide phase changes to light in different intermediate waveguides.

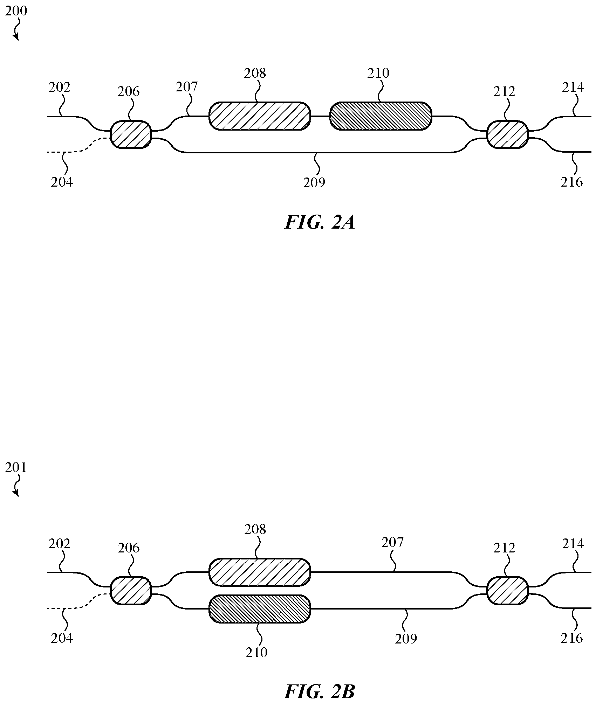

For example, FIG. 2A shows a schematic view of a photonic switch 200 suitable for use with the photonic integrated circuits described herein. The photonic switch 200 has a set of inputs, which in the variation shown in FIG. 2A includes a first input 202 and an optional second input 204, and a set of outputs including a first output 214 and a second output 216. The photonic switch is configured to concurrently receive a first wavelength of light and a second wavelength of light at one or more of the set of inputs, and is controllable (e.g., using a controller) to independently route the different wavelengths to corresponding selections of the set of inputs. It should be appreciated that the inputs and outputs of the photonic switches, as well as the inputs and outputs of the couplers included therein, may be configured as corresponding lengths of waveguides.

The photonic switch 200 includes a first coupler 206 that is optically connected to a second coupler 212 via a pair of intermediate waveguides. Specifically, a first waveguide 207 connects a first output of the first coupler 206 to a first input of the second coupler 212, and a second waveguide 209 connects a second output of the first coupler 206 to a second input of the second coupler 212. The first coupler 206 includes a set of inputs (each of which acts as a corresponding input of the photonic switch 200), such that light is received by the photonic switch 200 via a first coupler 206. Similarly, the second coupler 212 includes a set of outputs, each of which acts as an output of the photonic switch, such that light exits the photonic switch 200 via the second coupler.

The photonic switch 200 includes a first phase shifter 208 and a second phase shifter 210, which are located on the same waveguide (e.g., the first waveguide 207) in the variation shown in FIG. 2A. The first phase shifter 208 and the second phase shifter 210 are controllable to route the light received by the photonic switch 200 between the outputs 214 and 216. The photonic switch 200 may simultaneously receive a first wavelength of light and a second wavelength at the set of inputs. Each wavelength of light may be received by any input of the photonic switch 200 (e.g., the photonic switch 200 may receive both wavelengths at a single input or may receive different wavelengths at different inputs). In some examples, the photonic switch 200 only has a single input (e.g., input 202) that receives the first wavelength of light and the second wavelength of light.

The photonic switch 200 may be operatively connected to a controller that is configured to control both the first phase shifter 208 and the second phase shifter 210. Specifically, the controller may control the first phase shifter 208 and the second phase shifter 210 to provide respective phase shifts that are determined at least in part by i) the first and second wavelengths, ii) the input of the photonic switch that is receiving the first wavelength, iii) the input of the photonic switch that is receiving the second wavelength, iv) a first selection of the outputs to which the first wavelength will be routed, and v) a second selection of the outputs to which the second wavelength will be routed.

For example, the photonic switch 200 may be incorporated into the optical system 100 of FIG. 1 (e.g., in place of the photonic switch 104). In these instances the controller 106 may, as part of operation of the optical system 100, control the light source unit 102 to generate light at the first and second wavelengths such that this light is directed to the photonic switch 200. In some instances, the photonic switch 200 may always receive this light at the same input or inputs (e.g., light of the first wavelength is always directed to a first selection of the inputs and light of the second wavelength is always directed to a second selection of the inputs). In other instances, the selections of inputs may vary dynamically based on the operation of the optical system 100. Accordingly, when operating the photonic switch 200, the controller 106 will have information designating i) the first and second wavelengths currently be routed to the photonic switch 200, ii) the input of the photonic switch 200 that is receiving the first wavelength of light, and iii) the input the photonic switch 200 that is receiving the second wavelength of light. Additionally, the controller 106 will also have information designating iv) a first target selection of the outputs to which the first wavelength will be routed, and v) a second target selection of the outputs to which the second wavelength will be routed.

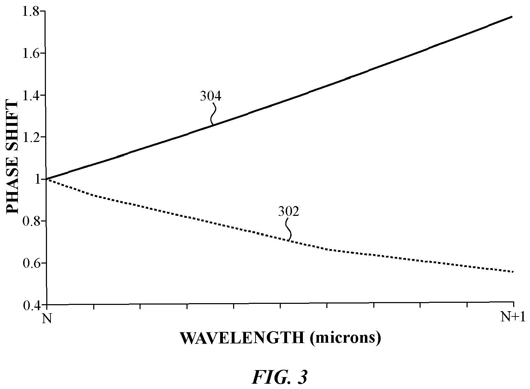

Using this information, the controller 106 may determine control signals to be applied to the first phase shifter 208 and the second phase shifter 210, such that light of the first wavelength will be routed by the photonic switch 200 to the first target selection of outputs and light of the second wavelength will be routed by the photonic switch 200 to the second target selection of outputs. Specifically, the first phase shifter 208 will provide a first phase shift to any light of the first wavelength passing through the first waveguide 207 and will provide a second phase shift to any light of the second wavelength passing through the first waveguide 207. Because the first phase shifter 208 has a first wavelength dependency, the first phase shift will be different than the second phase shift (e.g., the first phase shifter will phase shift the first and second wavelengths by different amounts). Similarly, the second phase shifter 210 will provide a third phase shift to any light of the first wavelength passing through the first waveguide 207 and will provide a fourth phase shift to any light of the second wavelength passing through the first waveguide 207. Because the first phase shifter 208 has a second wavelength dependency, the third phase shift will be different than the fourth phase shift (e.g., the second phase shifter will phase shift the first and second wavelengths by different amounts). The controller 106 may select these phases shifts to achieve the desired routing of the first and second wavelengths, such as described in more detail with respect to FIGS. 3-5E.

The first phase shifter 208 and second phase shifter 210 may be any suitable phase shifter capable of providing phase shifts with different wavelength dependencies. Examples of suitable phase shifters that may be designed to have a wavelength dependency include, for example, thermo-optic phase shifters, carrier-based phase shifters, and optomechanical phase shifters. In some instances, the first phase shifter 208 and the second phase shifter 210 may be the same type of phase shifter (e.g., both carrier-based phase shifters, but with different wavelength dependencies) or may be different types of phase shifters (e.g., one is a carrier-based phase while the other is a thermo-optic phase shifter).

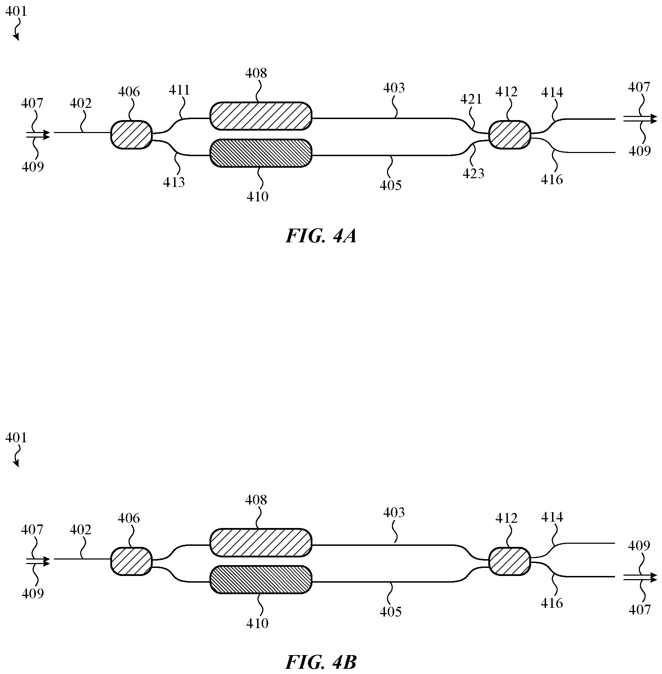

FIG. 2B shows a schematic view of another variation of a photonic switch 201 suitable for use with the photonic integrated circuits described herein. The photonic switch 201 is configured and labeled the same as the photonic switch 200 of FIG. 2A, except that the first phase shifter 208 and the second phase shifter 210 are positioned to adjust the phase of light in different waveguides. Specifically, the first phase shifter 208 is located on the first waveguide 207, while the second phase shifter 210 is located on the second waveguide 209. While the examples of photonic switches described herein with respect to FIGS. 4A-5E are shown as being configured like the photonic switch 201 of FIG. 2B, it should be appreciate that the same principles of operation may be applied to the photonic switch 200 of FIG. 2A.

FIG. 3 show a graph 300 comparing of phase shifts provided by two phase shifters having different wavelength dependencies. Specifically, the dashed line 302 represents a first wavelength dependency of a phase shift provided by a first phase shifter across a range of wavelengths of light. The solid line 304 represents a second wavelength dependency of a phase shift provided by a second phase shifter across the same range of wavelengths of light. An arbitrary range of wavelengths spanning 1 micron is shown in FIG. 3, thought it should be appreciated that the phase shifters described herein may be designed to have wavelength dependencies across any suitable range of wavelengths that will be received by the photonic switches described herein.

Specifically, the first wavelength dependency 302 and the second wavelength dependency 304 are shown in FIG. 3 as being normalized with respect to a first wavelength (e.g., wavelength N). In the example shown in FIG. 3, when the first phase shifter is used to shift the phase of light in a waveguide, light at wavelength N microns will be phase shifted by a first amount and light at wavelength N + 1 microns will be phase shifted by a second amount that is about 1.8 times the first amount. Similarly, when the second phase shifter is used to shift the phase of light in a waveguide, light at wavelength N microns will be phase shifted by a third amount and light at wavelength N + 1 microns will be phase shifted by a fourth amount that is about 0.6 times the third amount. Accordingly, when the first and second phase shifters are used as part of photonic switch to simultaneously route light at wavelengths N and N+1 microns, the phase shifts may be selected such that the first, second, third, and fourth amounts achieve the desired routing of this light.

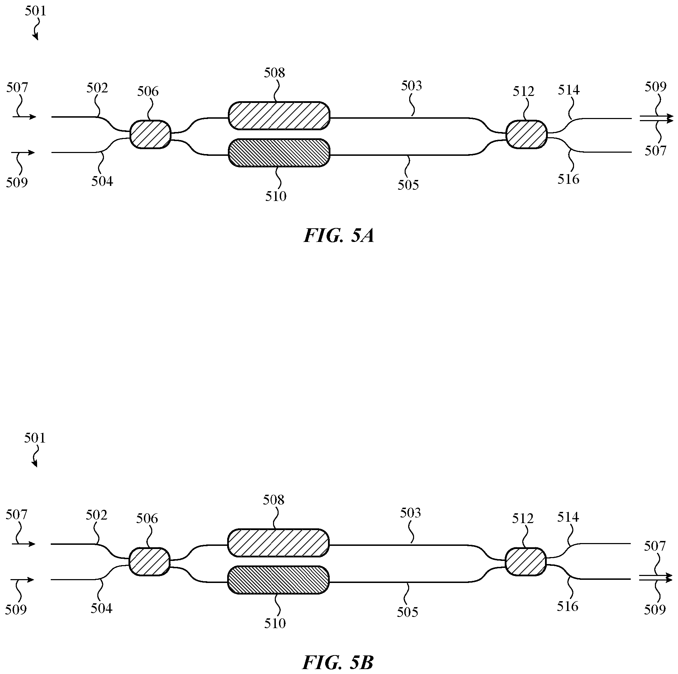

FIGS. 4A-4E and FIGS. 5A-5E depict different ways in which the photonic switches described herein may simultaneously and independently route light of different wavelengths. For example, FIGS. 4A-4E show examples of how light may be routed when two wavelengths of light are simultaneously received at a single input of a controllable photonic switch 401. The controllable photonic switch 401 is shown in FIGS. 4A-4E as a 1x2 controllable photonic switch 401 having a single input 402 and two outputs (a first output 414 and a second output 416). The principles described with respect to FIGS. 4A-4E may also be applied to a 2x2 controllable photonic switch having two inputs and two outputs (such as described herein with respect to FIGS. 2A and 2B), in which a single input simultaneously receives a first wavelength and a second wavelength of light.

In FIG. 4A, the controllable photonic switch 401 includes a first coupler 406 (e.g., a 1x2 coupler, as shown in FIG. 4A, or a 2x2 coupler) that has a first input 402 that acts as an input to the controllable photonic switch 401, a first output 411, and a second output 413. The controllable photonic switch 401 further includes a second coupler 412 (e.g., a 2x2 coupler) that has a first input 421, a second input 423, a first output 414, and a second output 416. The couplers described herein may include any suitable coupler that is capable of splitting light received at one or more inputs between two outputs, including, but not limited, to multi-mode interferometer couplers, adiabatic couplers, co-directional couplers, or the like. The first and second outputs 414, 416 of the second coupler 412 act as outputs of the controllable photonic switch. The controllable photonic switch includes a first leg 403 connecting a first output 411 of the first coupler 406 to a first input 421 of the second coupler 412 and a second leg connecting a second output 413 of the first coupler 406 to the second input 423 of the second coupler 412. It should be appreciated that the input 402, first output 414, second output 416, first leg 403, and second leg 405 may each be a waveguide.

The controllable photonic switch 401 includes a first phase shifter 408 positioned and controllable to selectively provide a first wavelength-dependent phase shift to light traveling through one of the first leg 403 or the second leg 405 (e.g., the first leg 403 as shown in FIG. 4A). The second phase shifter 410 is positioned and controllable to selectively provide a second wavelength-dependent phase shift to light traveling through one of the first leg 403 or the second leg 405 (e.g., the second leg 405 as shown in FIG. 4A). The first and second phase shifters 408, 410 are controllable (e.g., by a controller 106 as described previously) to selectively route light received by the first input 402 of the first coupler 406 between the first output 414 and the second output 416 of the second coupler.

Specifically, depending on the wavelength-dependent phase shifts provided by the first and second phase shifters 408, 410, the controllable photonic switch 401 may independently route light of a first wavelength and light of second wavelength that are simultaneously received at the first input 402 of the first coupler 406. Specifically, a controller may determine a first selection of outputs for the first wavelength of light and a second selection of outputs for the second wavelength of light. For example, the first selection of outputs may include either i) only the first output 414 of the second coupler 412, ii) only the second output 416 of the second coupler 412, or iii) a split between the first and second outputs 414, 416 of the second coupler 412 (e.g., according to a first target splitting ratio which may also be selected by a controller). Similarly, the second selection of outputs may include either i) only the first output 414 of the second coupler 412, ii) only the second output 416 of the second coupler 412, or iii) a split between the first and second outputs 414, 416 of the second coupler 412 (e.g., according to a second target splitting ratio which may also be selected by a controller).

When light received at the input 402 of the 1x2 controllable switch 401 is split by the first coupler 406 between the first leg 403 and the second leg 405 according to a first predetermined splitting ratio. Similarly, light received by each input of the second coupler 412 is split between the first output 414 and the second output 416 according to a second corresponding predetermined splitting ratio. The relative amounts of light that are coupled into the first output 414 and the second output 416 depend at least on 1) relative amounts of light in first leg 403 and the second leg 405 as it enters the second coupler 412, 2) the phase difference between the light in the first leg 403 and the second leg 405 as it enters the second coupler 412, and 3) the wavelength of the light. Accordingly, the phase difference between light in the first leg 403 and the second leg 405 may be independently adjusted for different wavelengths to independently route these different wavelengths.

To independently adjust the phase difference between the first leg 403 and the second leg 405 for different wavelengths, the first phase shifter 408 and the second phase shifter 410 may each apply a wavelength-dependent phase shift to a corresponding leg. For example, in the variation shown in FIG. 4A, the first phase shifter 408 will apply a first phase shift to light of the first wavelength traveling through the first leg 403 and a second phase shift to light of the second wavelength traveling through the first leg 403. The values of the first phase shift and the second phase shift will be related according to the first wavelength dependency of the first phase shifter 408 (e.g., such as described in relation to FIG. 3). Similarly, the second phase shifter 410 will apply a third shift to light of the first wavelength traveling through the second leg 405 and a fourth phase shift to light of the second wavelength traveling through the second leg 405. The values of the third phase shift and the fourth phase shift will be related according to the second wavelength dependency of the second phase shifter 410. Accordingly, the first and third phase shifts together at least partially control (e.g., along with any other phase shifts applied to the first wavelength of light as part of operation of the photonic switch 401) the phase difference for light of the first wavelength between the first leg 403 and the second leg 405 as it enters the second coupler 412. Similarly, the second and fourth phase shifts together at least partially control (e.g., along with any other phase shifts applied to the second wavelength of light as part of operation of the photonic switch 401) the phase difference for light of the second wavelength between the first leg 403 and the second leg 405 as it enters the second coupler 412.

Accordingly, the values of the first, second, third, and fourth phase shifts may be selected to independently route the first and second wavelengths to the first and second selection of outputs accordingly. For example, in the instance of FIG. 4A, the values of the first and third phase shifts may be selected such that light of the first wavelength (represented by arrows 407) has a phase difference of π between the first leg 403 and the second leg 405 as it enters the second coupler 412, which results in the first wavelength of light 407 being routed only to the first output 414. Similarly, the values of the second and fourth phase shifts may be selected such that light of the second wavelength (represented by arrows 409) has a phase difference of π between the first leg 403 and the second leg 405 as it enters the second coupler 412, which results in the second wavelength of light 409 being routed only to the first output 414. In this way, both the first and second wavelengths 407, 409 are simultaneously routed to the first output 414.

Conversely, to simultaneously route the first and second wavelengths of light 407, 409 only to the second output 416, such as shown in FIG. 4B, the first and third phase shifts may be selected such that light of the first wavelength 407 has a phase difference of 0 between the first leg 403 and the second leg 405 as it enters the second coupler 412. The values of the second and fourth phase shifts may be selected such that light of the second wavelength 409 has a phase difference of 0 between the first leg 403 and the second leg 405 as it enters the second coupler 412.

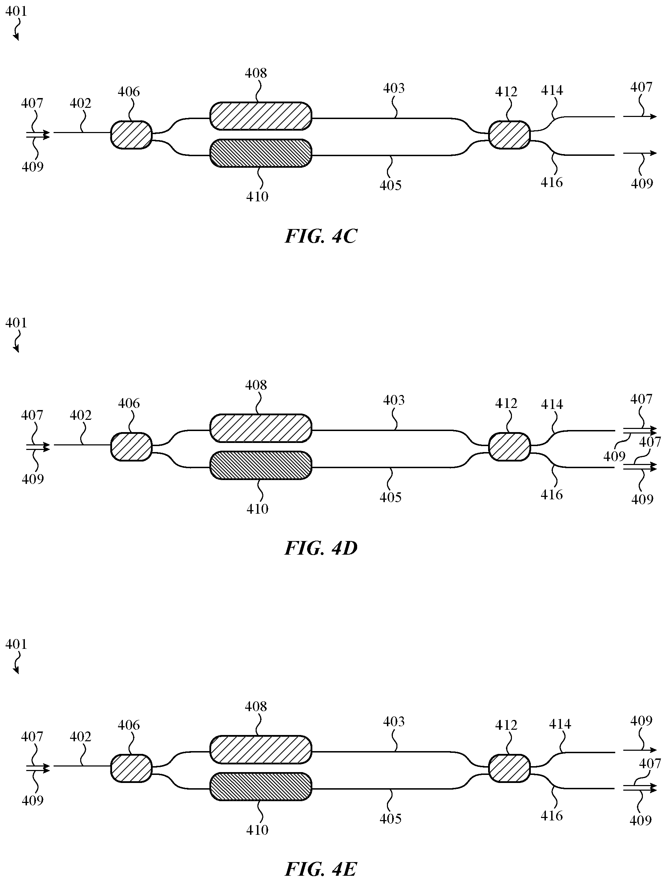

In other instances, the photonic switch 401 may be configured to route the first and second wavelengths of light to different outputs. For example, the first and third phase shifts may be selected such that light of the first wavelength 407 has a phase difference of π and the second wavelength 409 has a phase difference of 0 between the first leg 403 and the second leg 405 as these wavelengths enter the second coupler. In these instances, light of the first wavelength 407 will be routed only to the first output 414 and light of the second wavelength 409 will be routed only to the second output 416, such as shown in FIG. 4C.

In still other instances, the photonic switch 401 may be controlled to split one or both of the wavelengths between the first and second outputs. For example, as shown in FIG. 4D, the first and third phase shifts may be selected such that light of the first wavelength 407, as it enters the second coupler 412 has a first phase difference that is selected to split the first wavelength light 407 between the first output 414 and the second output 416 according to a first target splitting ratio. Similarly, the second and fourth phase shifts may be selected such that light of the second wavelength 409, as it enters the second coupler 412 has a second phase difference that is selected to split the second wavelength of light between the first output 414 and the second output 416 according to a second target splitting ratio. In this way, the first output 414 and the second output 416 each simultaneously receive a corresponding portion of the both the first and second wavelengths of light 407, 409. The first and second phase differences may be selected such that the first and second target splitting ratios are the same, or such that the first and second target splitting ratios are different.

In another example, as shown in FIG. 4E, the first and third phase shifts may be selected such that light of the first wavelength 407, as it enters the second coupler 412 has a first phase difference that is selected to split the first wavelength of light between the first output 414 and the second output 416 according to a first target splitting ratio. The second and fourth phase shifts may be selected such that light of the second wavelength 409, as it enters the second coupler 412 has a second phase difference that is selected to route the light to only one of the first output 414 or the second output 416 (e.g., only to the second output 416 as shown in FIG. 4E). In this way, light of the first wavelength may be split between the outputs, whereas light of the second wavelength is routed to a single output.

The controllable photonic switch 401 may dynamically adjust the operation of the first and second phase shifters 408, 410 with changes to the first and second wavelengths and/or the target outputs selected for these wavelengths. Accordingly, some configurations of the controllable photonic switch 401 may have significant flexibility in routing, at different times, multiple different pairs of wavelengths to different selections of target outputs. This may require the first and second phase shifters 408, 410 to be controllable to provide a range of different phase shifts. In other instances, the controllable photonic switch 401 may be designed to work in more limited sets of circumstances (e.g., a limited number of pairs of wavelengths and a limited set of target outputs), in which case the design of the first and/or second phase shifters 408, 410 may be simplified. For example, in some variations one or both of the phase shifters 408, 410 may be configured as a binary switch that can be controlled by the controller to either turn "off' by placing a moveable structure (not shown) in a first position or turn "on" by placing the moveable structure in a second position. In these instances, the phase shifter may be able to apply a first set of wavelength-dependent phase shifts when the binary switch is turned off, and a second set of wavelength-dependent phase shifts when the binary switch is turned on. Switching these phase shifters between off and on states may change how the photonic switch 401 routes light between its outputs.

When a photonic switch includes multiple inputs, similar principles to those described above with respect to FIGS. 4A-4E may be applied to simultaneously and independently route light received by different inputs of the photonic switch. For example, FIGS. 5A-5E illustrates operation of a variation of a 2x2 controllable photonic switch 501 having two inputs (a first input 502 and a second input 504) and two outputs (a first output 514 and a second output 516).

In FIG. 5A, the controllable photonic switch 501 includes a first coupler 506 (e.g., a 2x2 coupler) and a second coupler 512 (e.g., a 2 x 2 coupler), each of which has two inputs and two outputs. The first and second inputs of the first coupler 506 act as the first and second inputs 502, 504 of the controllable photonic switch 501. A first leg 503 connects a first output of the first coupler 506 to a first input of the second coupler 512, and a second leg 505 connects a first output of the first coupler 506 to a first input of the second coupler 512. The first and second outputs of the second coupler 512 act as the first and second outputs 514, 516 of the controllable photonic switch 501. It should be appreciated that the first input 502, the second input 504, the first output 514, second output 516, first leg 503, and second leg 505 may each be a waveguide.

The controllable photonic switch 501 includes a first phase shifter 508 positioned and controllable to selectively provide a first wavelength-dependent phase shift to light traveling through one of the first leg 503 or the second leg 505. The second phase shifter 510 is positioned and controllable to selectively provide a second wavelength-dependent phase shift to light traveling through one of the first leg 503 or the second leg 505. The first and second phase shifters 508, 510 are controllable (e.g., by a controller 106 as described previously) to selectively route light received by the photonic switch 501.

Light received by either the first input 502 and the second input 504 of the 2x2 controllable switch 501 are split by the first coupler 506 between the first leg 503 and the second leg 505 according to a first predetermined splitting ratio. Similarly, light received by each input of the second coupler 512 is split between the first output 514 and the second output 516 according to a corresponding second predetermined splitting ratio. As with the photonic switch 401 of FIGS. 4A-4E, the relative amounts of light that are coupled into the first output 514 and the second output 516 depend at least on 1) relative amounts of light in first leg 503 and the second leg 505 as it enters the second coupler 512, 2) the phase difference between the light in the first leg 503 and the second leg 505 as it enters the second coupler 512, and 3) the wavelength of the light. Accordingly, the phase difference between light in the first leg 503 and the second leg 505 may be independently adjusted for different wavelengths to independently route these different wavelengths.

To independently adjust the phase difference between the first leg 503 and the second leg 505 for different wavelengths, the first phase shifter 508 and the second phase shifter 510 may each apply a wavelength-dependent phase shift to a corresponding leg. These phase shifters 508, 510 may be operated in any manner as described herein with respect to FIGS. 4A-4E (e.g., such that the first phase shifter 508 applies first and third phase shifts to a pair of wavelengths and the second phase shifter 510 applies second and fourth phase shifts to the pair of wavelengths), except that the selection of a target phase difference for a given wavelength may depend on which input of the photonic switch 501 receives that wavelength of light.

For example, in FIG. 5A, light of a first wavelength (represented by arrows 507) may enter the photonic switch 501 along the first input 502, whereas light of a second wavelength (represented by arrows 509) may enter the photonic switch 501 along the second input 504. In FIG. 5A, the values of the first and third phase shifts may be selected such that light of the first wavelength 507 has a phase difference of π between the first leg 503 and the second leg 505 as it enters the second coupler 512, which results in the first wavelength of light 507 being routed only to the first output 514. The values of the second and fourth phase shifts may be selected such that light of the second wavelength 509 has a phase difference of 0 between the first leg 503 and the second leg 505 as it enters the second coupler 512, which also results in the second wavelength of light 509 being routed only to the first output 514. In this way, both the first and second wavelengths 507, 509 are simultaneously routed to the first output 514.

Conversely, to simultaneously route the first and second wavelengths of light 507, 509 only to the second output 516, such as shown in FIG. 5B, the first and third phase shifts may be selected such that light of the first wavelength 507 has a phase difference of 0 between the first leg 503 and the second leg 505 as it enters the second coupler 512. The values of the second and fourth phase shifts may be selected such that light of the second wavelength 509 has a phase difference of π between the first leg 503 and the second leg 505 as it enters the second coupler 512.

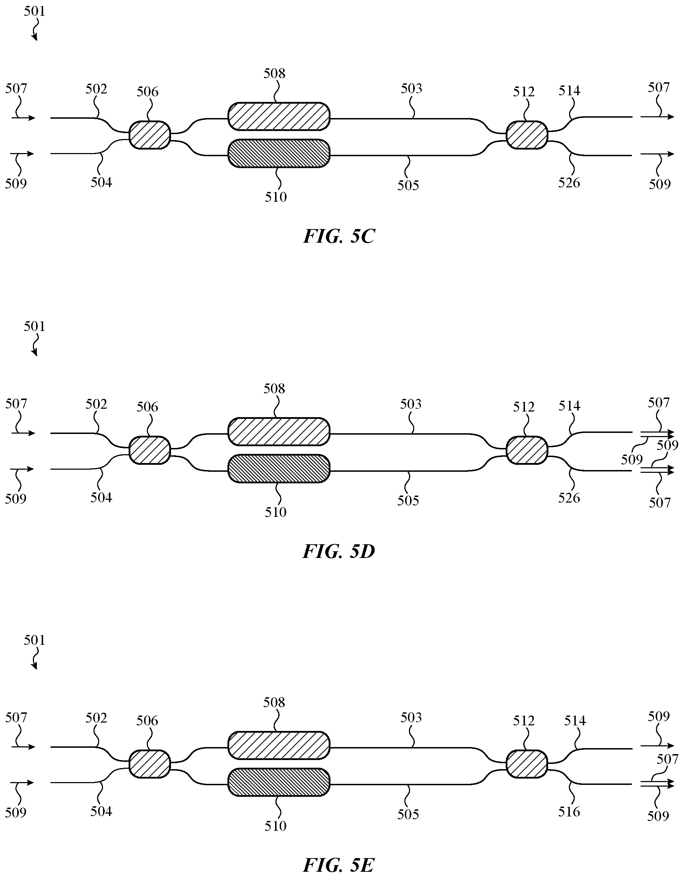

In other instances, the photonic switch 501 may be configured to route the first and second wavelengths of light to different outputs. For example, the first and third phase shifts may be selected such that light of the first wavelength 507 has a phase difference of π and the second wavelength 509 has a phase difference of π between the first leg 503 and the second leg 505 as these wavelengths enter the second coupler. In these instances, light of the first wavelength 507 will be routed only to the first output 514 and light of the second wavelength 509 will be routed only to the second output 516, such as shown in FIG. 5C.

In still other instances, the photonic switch 501 may be controlled to split one or both of the wavelengths between the first and second outputs. For example, as shown in FIG. 5D, the first and third phase shifts may be selected such that light of the first wavelength 507, as it enters the second coupler 512 has a first phase difference that is selected to split the first wavelength of light between the first output 514 and the second output 516 according to a first target splitting ratio. Similarly, the second and fourth phase shifts may be selected such that light of the second wavelength 509, as it enters the second coupler 512 has a second phase difference that is selected to split the second wavelength of light between the first output 514 and the second output 516 according to a second target splitting ratio. In this way, the first output 514 and the second output 516 each simultaneously receive a corresponding portion of the both the first and second wavelengths of light 507, 509. The first and second phase differences may be selected such that the first and second target splitting ratios are the same, or such that the first and second target splitting ratios are different.

In another example, as shown in FIG. 5E, the first and third phase shifts may be selected such that light of the first wavelength 507, as it enters the second coupler 512 has a first phase difference that is selected to split the first wavelength of light between the first output 514 and the second output 516 according to a first target splitting ratio. The second and fourth phase shifts may be selected such that light of the second wavelength 509, as it enters the second coupler 512 has a second phase difference that is selected to route the light to only one of the first output 514 or the second output 516 (e.g., only to the second output 516 as shown in FIG. 5E). In this way, light of the first wavelength may be split between the outputs, whereas light of the second wavelength is routed to a single output.

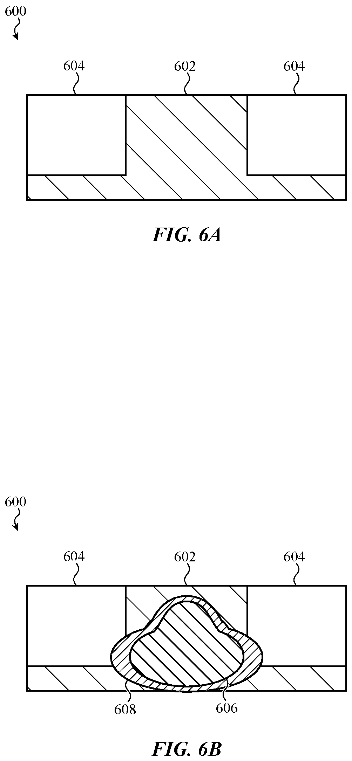

In some instances, a phase shifter as described herein may be formed from a portion of wavelength of a waveguide having an asymmetric cross-sectional shape. These phase shifters may be designed to have specific wavelength dependencies, and may be incorporated into the photonic switches described herein with respect to FIGS. 1-5E. Specifically, using an asymmetric cross-sectional shape may impact how the mode of light is contained with the waveguide, which may impact the wavelength dependency of the resulting phase shifter. For example, FIGS. 6A-6B show an example of a waveguide having a symmetric cross-sectional shape. Specifically, FIG. 6A shows a portion photonic integrated circuit 600 including a rib waveguide 602 having a symmetric cross-sectional shape. A bottom side of the waveguide 602 may be positioned on a cladding layer (not shown), which in turn may be supported on (either directly or via one or more intermediate layers) the top surface of a substrate (not shown). Additionally, one or more other surface of the waveguide 602 may be covered by a cladding layer (e.g., cladding layer 604). FIG. 6B shows the waveguide 602 carrying two modes of light, specifically a first optical mode of a first wavelength of light 606 and a second optical mode of a second wavelength of light 608 that is longer than the first wavelength of light 606. In these instances, both the first optical mode and the second optical mode are a fundamental mode. The shorter first wavelength of light 606 is better confined within the waveguide 602, and both wavelengths 606, 608 have a symmetric mode shape due to the symmetric cross-sectional shape of the waveguide 602.

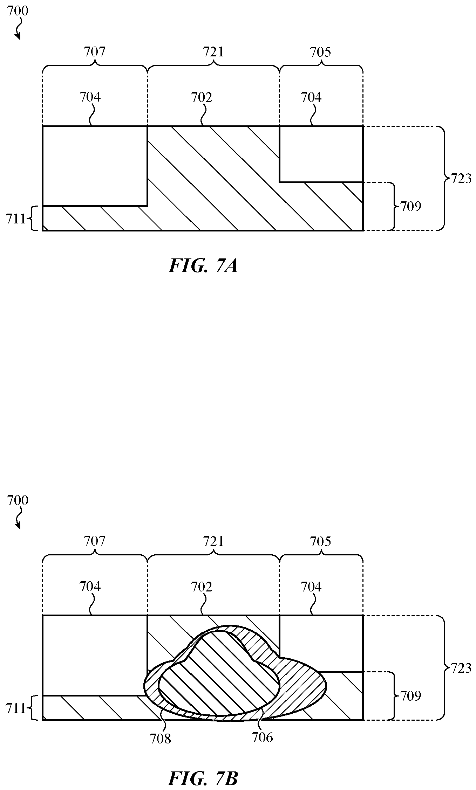

FIG. 7A-7B show an example of waveguide having an asymmetric cross-sectional shape. For example, FIG. 7A shows a photonic integrated circuit 700 including a rib waveguide 702 having an asymmetric cross-sectional shape. As with the waveguide 602 of FIGS. 6A-6B, one or more surfaces of the waveguide 702 may be positioned against a cladding layer (e.g., cladding 704) to help confine light within the waveguide 702. In the variation shown in FIGS. 7A-7B, the waveguide 702 includes a strip portion 721 positioned between a first shoulder 705 and a second shoulder 707. Specifically, the strip portion 721 forms a first portion of the waveguide 702 having a first height 723, the first shoulder 705 forms a second portion of the waveguide 702 having a second height 709, and the second shoulder 707 forms a third portion of the waveguide 702 having a third height 711. In the variation shown in FIGS. 7A-7B, the first height 723 is larger than the second height 709, and the second height 709 is larger than third height 711.

FIG. 7B shows the waveguide 702 carrying two modes of light, specifically a first optical mode of a first wavelength of light 706 and a second optical mode of a second wavelength of light 708 that is longer than the first wavelength of light 706. Due to the asymmetric shape of the waveguide 702, the modes of both the first wavelength of light 706 and the longer wavelength of light 708 are asymmetric. Because the first wavelength of light 706 is better confined within the strip portion 721 of waveguide 702, a larger proportion of the mode of the second wavelength of light 708 will extend into the first shoulder 705. This may be useful in tailoring a wavelength dependency of a phase shifter that incorporates the waveguide 702 of FIGS. 7A-7B.

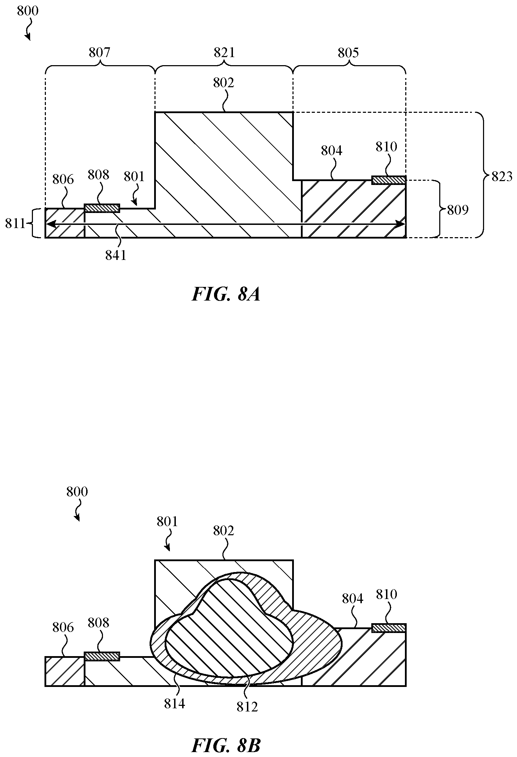

FIG. 8A-8D show an example of a carrier-based phase shifter 800 that includes a length of a waveguide 801 having an asymmetric cross-sectional shapes. The phase shifter 800 may be formed as part of a photonic integrated circuit as shown herein. As shown in FIG. 8A, the length of the waveguide 801 is configured to form a diode. The waveguide 801 has a first doping region 802 and a second doping region 804 that form the diode. For example, the first doping region 802 may be doped with a first material to form a P-doped region and the second doping region 804 may be doped with a second material to form an N-doped region. In the variation shown in FIG. 8A, the first doping region 802 and the second doping region 804 form a PN diode. It should be appreciated that one or more portions of the waveguide 801 (e.g., such as an undoped region 806 positioned outside of the diode) may remain undoped.

To operate the phase shifter 800, a first conductive trace 810 is located on and electrically connected to a portion of the first doping region 802, and a second conductive trace 808 is located on and electrically connected to a portion of the second doping region 804. A controller described herein may drive current through the photonic integrated circuit via the first conductive trace 810 and the second conductive trace 808 to introduce a wavelength-dependent phase shift to light travelling through the waveguide 801.

The waveguide 801 may have an asymmetric cross-sectional shape, such as shown in FIG. 8A. Specifically, the waveguide 801 is asymmetric in a direction 841 parallel to a top surface of a substrate (not shown) on which the waveguide 801 is supported. In these variations the waveguide 801 is configured as an asymmetric rib waveguide having a strip portion 821 positioned between a first shoulder 805 and a second shoulder 807. Specifically, the strip portion 821 forms a first portion of the waveguide 801 having a first height 823, the first shoulder 805 forms a second portion of the waveguide 801 having a second height 809, and the second shoulder 807 forms a third portion of the waveguide 801 having a third height 811. In the variation shown in FIG. 8A, the first height 823 is larger than the second height 809, and the second height 809 is larger than third height 811. In these variations, the first conductive trace 810 may be connected to the first shoulder 805, and the second conductive trace 808 may be connected to the second shoulder 807, such that current driven through diode flows through strip portion 821.

The asymmetric shape of the waveguide 801 may have a wavelength-dependent confinement of light such as described herein with respect to FIG. 7B. FIG. 8B shows the waveguide 801 carrying two modes of light, specifically a first optical mode of a first wavelength of light 812 and a second optical mode of a second wavelength of light 814 that is longer than the first wavelength of light 812. These modes may represent light of two wavelengths received by a photonic switch as described herein. When the phase shifter 800 is operated to drive current through diode, the first and second wavelengths of light 812, 814 will receive different phase shifts.

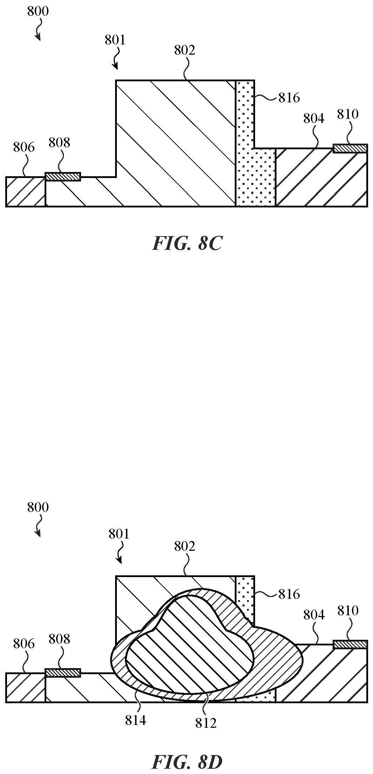

Specifically, in the configuration shown in FIGS 8A-8C, phase shifter 800 will apply a larger phase shift to the longer wavelength of light 814 as compared to the shorter wavelength of light 812. When current is driven through the diode (e.g., between the first conductive trace 810 and the second conductive trace 808), such as shown in FIG. 8C, a depletion region 816 will form at the interface between the first doping region 802 and the second doping region 804. This depletion will locally change the refractive index of the waveguide 801, and which may in turn change the phase of light traveling through the depletion region 816.

For example, FIG. 8D shows the first and second wavelengths of light 812, 814 traveling through the waveguide 801 while the diode is operated to generate the depletion region 816. In the variation shown in FIGS. 8A-8D, the interface between the first doping region and the second doping region is positioned in the first shoulder 805. Accordingly, the depletion region 816 may be formed at least partially in the first shoulder 805. In some of these variations, the depletion region 816 is positioned in both the first shoulder 805 and the strip portion 821. Because the mode of the second wavelength of light 814 extends further into the first shoulder 805 as compared to the mode first wavelength of light 812, a larger percentage of the second wavelength of light 814 will interact in the depletion region 816. Accordingly, the second wavelength of light 814 will undergo a larger phase shift than the first wavelength of light 812. Accordingly, a controller (e.g., controller 106) may drive current through the photonic integrated circuit via the first conductive trace 810 and the second conductive trace 808 to introduce a wavelength-dependent phase shift to light travelling through the waveguide 800.

In other variations, the interface between the first doping region and the second doping region is positioned in the strip portion 821, but is positioned sufficiently close to the first shoulder 805 such that the a larger percentage of the second wavelength of light 814 will interact in the depletion region 816. In these instances, the phase shifter 800 may still provide a wavelength-dependent phase shift, but may have a weaker a wavelength dependency as compared to the configuration shown in FIGS 8A-8D.

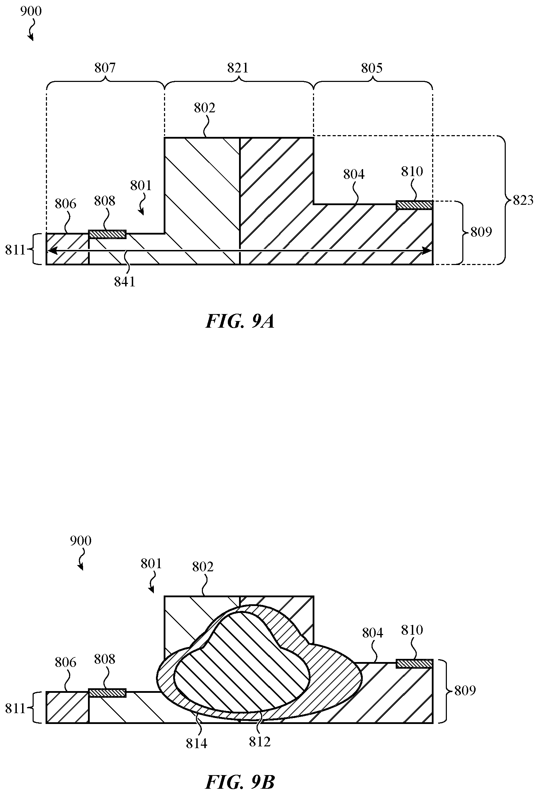

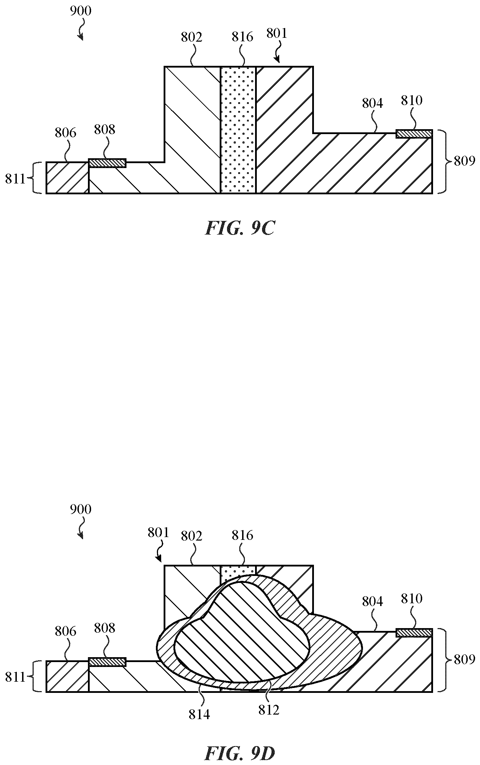

FIG. 9A-9D show another example of a carrier-based phase shifter 900 that includes a length of a waveguide 801 having an asymmetric cross-sectional shapes. The phase shifter 900 is configured and labeled the same as the phase shifter 800 of FIG. 8A, except that in the configuration shown in FIGS 9A-9D, phase shifter 900 may apply an equal phase shift to the longer wavelength of light 814 as compared to the shorter wavelength of light.

In the variation shown in FIGS. 9A-9D, the interface between the first doping region 802 and the second doping region 804 is positioned in the strip portion 821. Accordingly, the depletion region 816 may be formed in the strip portion 821. Depending on the placement of the interface and the size of the resulting depletion region, the modes of first wavelength of light 812 and the second wavelength of light 814 may interact in the depletion region 816 equally in the strip portion 821, thereby result in an equal phase shifts for both wavelengths of light are the same.

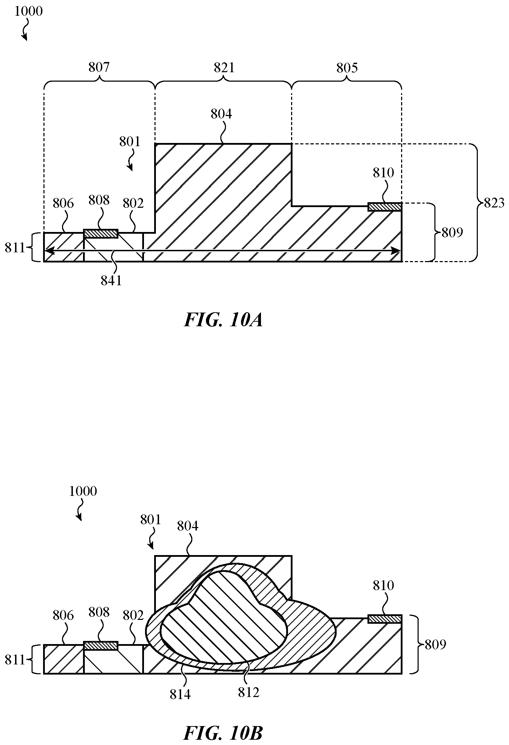

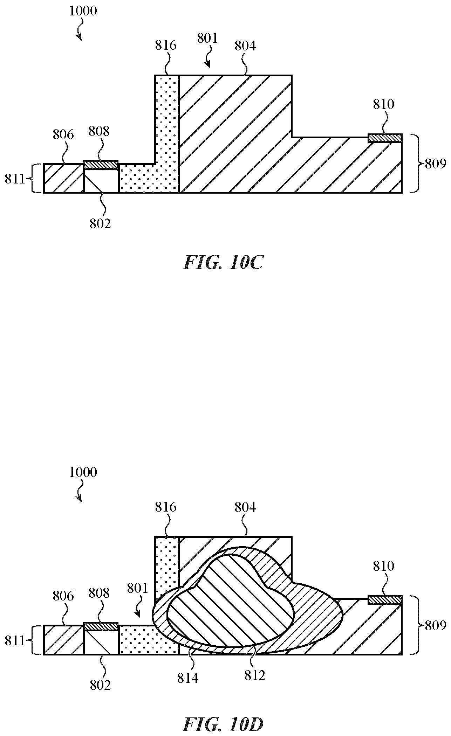

FIG. 10A-10D show another example of a carrier-based phase shifter 1000 that includes a length of a waveguide 801 having an asymmetric cross-sectional shapes. The phase shifter 1000 is configured and labeled the same as the phase shifter 800 of FIG. 8A, except that, in the configuration shown in FIGS 10A-10D, phase shifter 1000 will apply a larger phase shift to the shorter wavelength of light 812 as compared to the longer wavelength of light 814.

In the variation shown in FIGS. 10A-10D, the interface between the first doping region 802 and the second doping region 804 is positioned in the second shoulder 807. Accordingly, the depletion region 816 may be formed at least partially in the second shoulder 807. In some of these variations, the depletion region 816 is positioned in both the second shoulder 807 and the strip portion 821. Because the second wavelength of light 814 extends further into the first shoulder 805 as compared to the first wavelength of light 812, a larger percentage of the first wavelength of light 814 will interact in the depletion region 816. Accordingly, the first wavelength of light 812 will undergo a larger phase shift than the second wavelength of light 814.

In other variations, the interface between the first doping region and the second doping region is positioned in the strip portion 821, but is positioned sufficiently close to the second shoulder 807 such that the a larger percentage of the first wavelength of light 812 will interact in the depletion region 816. In these instances, the phase shifter 800 may still provide a wavelength-dependent phase shift, but may have a weaker a wavelength dependency as compared to the configuration shown in FIGS 10A-10D.

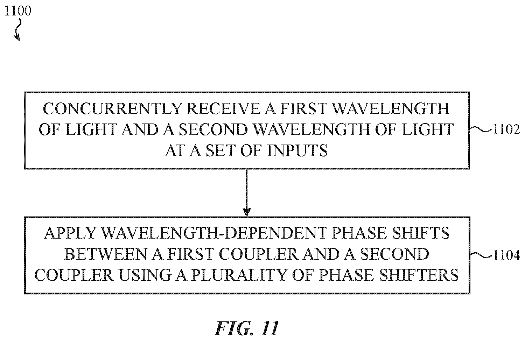

FIG. 11 depicts a method 1100 of operating a controllable switch having a set of inputs and a set of outputs and comprising a first coupler, a second coupler, and a plurality of phase shifters positioned between the first coupler and the second coupler. This method 1100 may be performed by any of the controllable switches described herein. Initially, the method 1100 includes concurrently receiving a first wavelength of and a second wavelength at a set of inputs at step 1102. The first wavelength of light is different than the second wavelength of light. At step 1104, the controllable switch applies a plurality of wavelength-dependent phase shifts between the first coupler and the second coupler using a plurality of phase shifters. The first wavelength of light and the second wavelength of light are routed to a first target selection of the set of outputs and the second wavelength of light to a second target selection of the set of outputs. The plurality of wavelength-dependent phase shifts are selected using the first and second inputs, the first and second wavelengths, and the first and second target selections. The controllable switch includes a waveguide supported on a substrate. In some variations, one of both of the phase shifters are formed form a respective length of the waveguide has a cross-sectional shape that is asymmetric in a direction parallel to a top surface of the substrate. The length of the waveguide includes a first doping region and a second doping region that form a diode. A cross-sectional area of the first doping region is equal to a cross-section rea of the first doping region. In some variations, the cross-sectional area of the first doping region is larger than the cross-sectional area of the second doping region.

Exemplary methods, devices, electronic devices, and non-transitory computer-readable storage media are set out in the following items.
1. A photonic integrated circuit comprising:
   a controllable switch comprising:
   a first coupler having a first input, a second input, a first output, and a second output;
   a second coupler having a third input, a fourth input, a third output, and a fourth output;
   a first leg connecting the first output of the first coupler to the third input of the second coupler;
   a second leg connecting the second output of the first coupler to the fourth input of the second coupler; and
   a first phase shifter with a first wavelength dependency and a second phase shifter with a second wavelength dependency different than the first wavelength dependency, wherein:
      the first phase shifter and the second phase shifter are each positioned between the first coupler and the second coupler,
      the controllable switch is configured to concurrently receive a first wavelength of light and a second wavelength of light via the first coupler; and the first phase shifter and the second phase shifter are controllable to independently route the first wavelength of light to a first selection of the third and fourth outputs and the second wavelength of light to a second selection of the third and the fourth outputs.
2. The photonic integrated circuit of item 1, further comprising:
   a light source unit comprising one or more light sources configured to generate the first wavelength of light and the second wavelength of light.
3. The photonic integrated circuit of item 1 or item 2, further comprising:
   a controller configured to:
   control the first phase shifter to apply a first phase shift to the first wavelength of light and a second phase shift to the second wavelength of light according to the first wavelength dependency;and
   concurrently control the second phase shifter to apply a third phase shift to the first wavelength of light and a fourth phase shift to the second wavelength of light according to the second wavelength dependency, wherein:
      the first phase shift and the third phase shift route the first wavelength of light from the first coupler to the first selection of the third and fourth outputs; and
      the second phase shift and the fourth phase shift route the second wavelength of light from the first coupler to the second selection of the third and fourth outputs.
4. The photonic integrated circuit of any of items 1-3, wherein the first phase shifter is positioned to change the phase of light traveling through the first leg.
5. The photonic integrated circuit of any of items 1-4, wherein the second phase shifter is positioned to change the phase of light traveling through the second leg.
6. The photonic integrated circuit of any of items 1-5, wherein the first selection of the third and fourth outputs is the third output.
7. The photonic integrated circuit of any of items 1-6, wherein the second selection of the third and fourth outputs is the fourth output.
8. The photonic integrated circuit of any of items 1-7, wherein the first selection of the third and fourth outputs is the third output and the fourth output.
9. The photonic integrated circuit of any of items 1-8, wherein the second selection of the third and fourth outputs is the third output and the fourth output.
10. A photonic integrated circuit comprising:
   a substrate having a top surface;
   a waveguide supported on the top surface of the substrate, wherein a length of the waveguide has a cross-sectional shape that is asymmetric in a direction parallel to the top surface and comprises a first doping region and a second doping region that form a diode; and
   a phase shifter comprising:
      the diode;
      a first conductive trace electrically connected to the first doping region;
      a second conductive trace electrically connected to the second doping region; and
      a control circuit configured to drive current through the diode via the first conductive trace and the second conductive trace to introduce a wavelength-dependent phase shift to light traveling through the length of the waveguide.
11. The photonic integrated circuit of item 10, wherein:
   the cross-sectional shape of the length of the waveguide has a first section having a first height, a second section having a second height, and a third section having a third height;
   the second section is positioned between the first section and the third section; and
   the third height is larger than the first height and is smaller than the second height.
12. The photonic integrated circuit of any of item 10 or item 11, wherein an interface between the first doping region and the second doping region is positioned in the first section.
13. The photonic integrated circuit of any of items 10-12, wherein a cross-sectional area of the second doping region is larger than a cross-sectional area of the first doping region.
14. The photonic integrated circuit of any of item 10 or item 11, wherein an interface between the first doping region and the second doping region is positioned in the second section.
15. The photonic integrated circuit of any of items 10, 11, or 14, wherein a cross-sectional area of the second doping region is equal to a cross-sectional area of the first doping region.
16. The photonic integrated circuit of any of item 10 or item 11, wherein an interface between the first doping region and the second doping region is positioned in the third section.
17. The photonic integrated circuit of any of items 10, 11, or 16, wherein a cross-sectional area of the first doping region is larger than a cross-sectional area of the second doping region.
18. The photonic integrated circuit of any of items 10-17, wherein a first conductive trace electrically connected to the first section.
19. The photonic integrated circuit of any of items 10-18, wherein a second conductive trace electrically connected to the third section.
20. The photonic integrated circuit of any of items 10-19, wherein the diode is a PN diode.
21. The photonic integrated circuit of any of items 10-20, wherein the waveguide is a rib waveguide.
22. A method of operating a controllable switch having a set of inputs and a set of outputs and comprising a first coupler, a second coupler, and a plurality of phase shifters positioned between the first coupler and the second coupler, the method comprising:
   receiving a first wavelength of light at a first input of the set of inputs;
   concurrently receiving a second wavelength of light at a second input of the set inputs;
   applying a plurality of wavelength-dependent phase shifts between the first coupler and the second coupler using the plurality of phase shifters to independently route the first wavelength of light to a first target selection of the set of outputs and the second wavelength of light to a second target selection of the set of outputs; wherein:
      the plurality of wavelength-dependent phase shifts are selected using the first and second inputs, the first and second wavelengths, the first and second target selections.

The foregoing description, for purposes of explanation, uses specific nomenclature to provide a thorough understanding of the described embodiments. However, it will be apparent to one skilled in the art, after reading this description, that the specific details are not required in order to practice the described embodiments. Thus, the foregoing descriptions of the specific embodiments described herein are presented for purposes of illustration and description. They are not targeted to be exhaustive or to limit the embodiments to the precise forms disclosed. It will be apparent to one of ordinary skill in the art, after reading this description, that many modifications and variations are possible in view of the above teachings.

## Claims

1. A photonic integrated circuit comprising:
a controllable switch comprising:
a first coupler having a first input, a second input, a first output, and a second output;
a second coupler having a third input, a fourth input, a third output, and a fourth output;
a first leg connecting the first output of the first coupler to the third input of the second coupler;
a second leg connecting the second output of the first coupler to the fourth input of the second coupler; and
a first phase shifter with a first wavelength dependency and a second phase shifter with a second wavelength dependency different than the first wavelength dependency, wherein:
the first phase shifter and the second phase shifter are each positioned between the first coupler and the second coupler,
the controllable switch is configured to concurrently receive a first wavelength of light and a second wavelength of light via the first coupler; and the first phase shifter and the second phase shifter are controllable to independently route the first wavelength of light to a first selection of the third and fourth outputs and the second wavelength of light to a second selection of the third and the fourth outputs.

2. The photonic integrated circuit of claim 1, further comprising:
a light source unit comprising one or more light sources configured to generate the first wavelength of light and the second wavelength of light.

3. The photonic integrated circuit of claim 1 or claim 2, further comprising:
a controller configured to:
control the first phase shifter to apply a first phase shift to the first wavelength of light and a second phase shift to the second wavelength of light according to the first wavelength dependency;and
concurrently control the second phase shifter to apply a third phase shift to the first wavelength of light and a fourth phase shift to the second wavelength of light according to the second wavelength dependency, wherein:
the first phase shift and the third phase shift route the first wavelength of light from the first coupler to the first selection of the third and fourth outputs; and
the second phase shift and the fourth phase shift route the second wavelength of light from the first coupler to the second selection of the third and fourth outputs.

4. The photonic integrated circuit of any of claims 1-3, wherein the first phase shifter is positioned to change the phase of light traveling through the first leg.

5. The photonic integrated circuit of any of claims 1-4, wherein the second phase shifter is positioned to change the phase of light traveling through the second leg.

6. The photonic integrated circuit of any of claims 1-5, wherein the first selection of the third and fourth outputs is the third output.

7. The photonic integrated circuit of any of claims 1-6, wherein the second selection of the third and fourth outputs is the fourth output.

8. The photonic integrated circuit of any of claims 1-7, wherein the first selection of the third and fourth outputs is the third output and the fourth output.

9. The photonic integrated circuit of any of claims 1-8, wherein the second selection of the third and fourth outputs is the third output and the fourth output.

10. A photonic integrated circuit comprising:
a substrate having a top surface;
a waveguide supported on the top surface of the substrate, wherein a length of the waveguide has a cross-sectional shape that is asymmetric in a direction parallel to the top surface and comprises a first doping region and a second doping region that form a diode; and
a phase shifter comprising:
the diode;
a first conductive trace electrically connected to the first doping region;
a second conductive trace electrically connected to the second doping region; and
a control circuit configured to drive current through the diode via the first conductive trace and the second conductive trace to introduce a wavelength-dependent phase shift to light traveling through the length of the waveguide.

11. The photonic integrated circuit of claim 10, wherein:
the cross-sectional shape of the length of the waveguide has a first section having a first height, a second section having a second height, and a third section having a third height;
the second section is positioned between the first section and the third section; and
the third height is larger than the first height and is smaller than the second height.

12. The photonic integrated circuit of any of claim 10 or claim 11, wherein an interface between the first doping region and the second doping region is positioned in the first section.

13. The photonic integrated circuit of any of claims 10-12, wherein a cross-sectional area of the second doping region is larger than a cross-sectional area of the first doping region.

14. The photonic integrated circuit of any of claim 10 or claim 11, wherein an interface between the first doping region and the second doping region is positioned in the second section.

15. The photonic integrated circuit of any of claims 10, 11, or 14, wherein a cross-sectional area of the second doping region is equal to a cross-sectional area of the first doping region.
